# EUROPÄISCHE PATENTSCHRIFT

(11) **EP 1 935 763 B1**
(45) Veröffentlichungstag und Bekanntmachung des Hinweises auf die Patenterteilung: **27.02.2013**
(21) Anmeldenummer: 07024735.8
(22) Anmeldetag: 20.12.2007
(51) Int. Cl.: B62D 33/02

(54) **Runge für eine verschliessbare Ladeöffnung eines Fahrzeugaufbaus**
Stanchion for a closeable loading aperture of a vehicle superstructure
Rancher pour une ouverture de chargement refermable d'une superstructure de véhicule

(30) Priorität: 22.12.2006 DE 102006061339
(43) Veröffentlichungstag der Anmeldung: 25.06.2008
(73) Patentinhaber: F. HESTERBERG & SÖHNE GmbH & Co. KG, 58256 Ennepetal (DE)
(72) Erfinder: Klein, Claus-Jürgen, 58332 Schwelm (DE); Kolodziej, Eugen, 58099 Hagen (DE); Feinbier, Joachim, Dipl.-Ing., 58256 Ennepetal (DE)
(74) Vertreter: Christophersen & Partner

(56) Entgegenhaltungen:
- EP-A- 1 112 917
- EP-A- 1 457 409
- DE-C1- 19 545 616
- FR-A- 2 535 655

## Beschreibung

Die Erfindung betrifft eine Runge für eine Ladeöffnung eines Fahrzeugaufbaus, welche in ihrem unteren Teil mit einer Hebelanordnung zum Verriegeln der Runge an einem fahrzeugfesten Rungenhalter und mit einem Schutzelement versehen ist.

Bei Rungen, wie sie z. B. aus der EP 0 941 195 B1 und der EP 1 517 824 B1 bekannt sind, erfolgt das Festlegen der Rungen an dem durch bewegliche Bordwände oder Planen geschlossenen Nutzfahrzeugaufbau über fahrzeugfeste Rungenhalter, die im unteren Bereich der Runge etwa in Höhe der Ladefläche des Fahrzeuges befestigt sind. Die Verriegelung der Runge an dem Rungenhalter erfolgt von Hand durch Streckung einer an der Runge vorgesehenen Kniehebelanordnung aus zwei gelenkverbundenen Hebelarmen, von denen üblicherweise ein Hebelarm mit einem Betätigungshebel versehen ist, der den zum Strecken der Kniehebelanordnung erforderlichen Kraftaufwand verringert.

Der obere Bereich der Runge wird in der Praxis durch die Plane des Fahrzeugaufbaus bedeckt, und ist daher nicht unmittelbar dem Einfluss der Witterung oder des im Winterfahrbetrieb aufgewirbelten Salzwassers ausgesetzt. Hingegen liegt der untere Teil der Runge frei und ist daher dem Einfluss der Witterung sowie dem gerade bei Autobahnfahrten im Winter vorherrschenden Salznebel ausgesetzt. Auf diese Weise kann es an der Runge zu unerwünschten Verschmutzungen und auch Korrosionen kommen, und damit langfristig zu einer Beeinträchtigung der Gelenkteile und Verriegelungselemente der Runge.

Bei der Runge nach der EP 1 112 917 A2 ist diese in ihrem unteren Teil mit einer Hebelanordnung zum Verriegeln der Runge an dem fahrzeugfesten Rungenhalter versehen. Der Hebel der Hebelanordnung ist mit einer flächigen Abdeckplatte versehen, welche die dahinter angeordneten mechanischen Elemente sowie den Rungenhalter verdeckt. Zwischen dieser Abdeckplatte und links und rechts davon angeordneten Längsprofilen der Runge befinden sich Spalte, durch die z. B. Schmutz oder Spritzwasser hindurchtreten kann, wodurch die Gefahr von Korrosionen oder des Zusetzens oder Verschmutzens der dahinter angeordneten Teile besteht.

Es ist daher das Ziel der Erfindung, durch geeignete konstruktive Maßnahmen derartige Gefahren einer Schädigung der Runge zumindest gering zu halten.

ZurLösung wird eine Runge mit den Merkmalen des Patentanspruchs 1 vorgeschlagen.

Ein solches Schutzelement ist geeignet, die ansonsten nach außen offene liegende Runge soweit abzudecken, dass bei verriegelter Runge kein Schmutz und kein Spritzwasser an die dahinter angeordneten Teile der Runge gelangen kann. Die Gefahr von Korrosionen oder des Zusetzens oder Verschmutzens der dort angeordneten Gelenke und beweglichen Teile wird daher zumindest reduziert.

Gemäß einer Ausführungsform wird vorgeschlagen, dass sich das Schutzelement bei geschlossener Hebelanordnung selbsttätig an den Längsabschnitt der Runge legt, wohingegen das Schutzelement bei geöffneter Hebelanordnung von dem dahinter eingeordneten Längsabschnitt der Runge absteht, z. B. in einem Winkel. Durch das gleichsame Anlegen des Schutzelements erst beim Schließen der Hebelanordnung sind keine separaten Handgriffe für die Anbringung des Schutzelements nötig. Es ergibt sich ein guter Bedienkomfort der Runge.

Gemäß einer Ausführungsform weist das Schutzelement entlang seiner Erstreckung mindestens einen Verformungsbereich auf, über den beim Schließen der Hebelanordnung sich verändernde Abstände ausgeglichen werden können.

Gemäß einer Ausführungsform erstreckt sich das Schutzelement zwischen dem unteren Ende der Runge und einem Hebel der Hebelanordnung. Vorzugsweise ist ein unterer Rand des Schutzelementes an der Runge, und ein oberer Rand des Schutzelements an einem Hebel der Hebelanordnung befestigt, der schwenkbeweglich gegen den Rungenhalter abgestützt ist

Gemäß einer bevorzugten Ausführungsform ist das Schutzelement eine Abdeckung aus einem flachen, insgesamt biegsamen Material. Von besonderem Vorteil ist, wenn das Schutzelement aus einer wetterfesten Bahn aus Gummi besteht.

Vorzugsweise ist die Breite des Schutzelementes größer, als die Summe aus der Breite des durch das Schutzelement abgedeckten Rungenabschnittes und den Breiten der beiderseits der Runge angeordneten Spalte zu angrenzenden, beweglichen Bordwänden. Auf diese Weise wird mit dem Anlegen der üblicherweise abklappbaren Bordwände zugleich der überstehende vertikale Randabschnitt des Schutzelements nach innen gebogen, wodurch in den Spalten beiderseits der Runge eine besonders vorteilhafte Abdichtung zu der jeweiligen Bordwand hin erreicht wird.

Zur Erzielung einer günstigen Verformung des Schutzelementes beim Anklappen der Bordwände, ohne dass es zu dem Entstehen von Spalten kommt, wird mit einer weiteren Ausgestaltung vorgeschlagen, dass auf den oberen Rand des Schutzelementes von außen eine Leiste aufgesetzt ist, die kürzer ist als die Breite des darunter angeordneten Schutzelementes, und nicht länger als die Breite des abgedeckten Rungenabschnittes.

Eine weitere vorteilhafte Ausführungsform sieht vor, dass das Schutzelement starr ist und im Bereich seines oberen Endes an einem Hebel der Hebelanordnung befestigt ist. Starre Schutzelemente, beispielsweise aus Aluminium gepresste Formteile, sind witterungsbeständiger als beispielsweise aus Gummimaterial bestehende Schutzelemente und zeichnen sich insoweit durch eine hohe Lebensdauer aus.

Weiterbildungen einer Runge mit einem starr ausgebildeten Schutzelement sind in den abhängigen Unteransprüchen 18 bis 28 angegeben.

Weitere Vorteile und Einzelheiten werden nachfolgend anhand der zugehörigen Zeichnungen erläutert. Darin zeigen:
- Fig. 1: ein Fahrzeug mit einem Fahrzeugaufbau, dessen seitliche Ladeöffnung durch vertikale Rungen unterteilt ist;
- Fig. 2: einen Schnitt durch den unteren Teil einer der Rungen, wobei die Runge in verriegelter bzw. gesperrter Stellung dargestellt ist;
- Fig. 3: die Runge nach Fig. 2 in teilweise entriegelter Stellung;
- Fig. 4: die teilweise entriegelte Runge nach Fig. 3 in einer perspektivischen Darstellung;
- Fig. 5: die verriegelte Runge nach Fig. 2 in einer anderen perspektivischen Darstellung;
- Fig. 6: in einer zweiten Ausführungsform den unteren Teil einer Runge mit teilweise angeschwenkter Bordwand;
- Fig. 7: in einer dritten Ausführungsform den unteren Teil einer Runge mit teilweise angeschwenkter Bordwand;
- Fig. 8: die Gegenstände nach Fig. 7 bei entriegelter Runge;

- Fig. 9: in einer vierten Ausführungsform den unteren Teil einer Runge mit einem an der Runge einhängbaren Schutzelement;
- Fig. 10: die Gegenstände nach Fig. 9 bei geöffneter Abdeckung;
- Fig. 11: eine perspektivische Ansicht einer Runge in verriegelter Stellung gemäß einer weiteren Ausführung der Erfindung;
- Fig. 12: eine vergrößerte Detailansicht gemäß der in Fig. 11 mit XII bezeichneten Einzelheit;
- Fig. 13: die Runge nach Fig. 11 in entriegelter Stellung;
- Fig. 14: eine weitere Ausführungsform einer Runge in entriegelter Stellung;
- Fig. 15: die Runge nach Fig. 14 in verriegelter Stellung;
- Fig. 16: eine perspektivische Detailansicht der Runge aus Fig. 15 in vergrößerter Ansicht und von unten her betrachtet;
- Fig. 17: eine Schnittdarstellung der in Fig. 15 dargestellten Runge und
- Fig. 18: eine vergrößerte Detailansicht der in Fig. 17 mit XVIII bezeichneten Einzelheit.

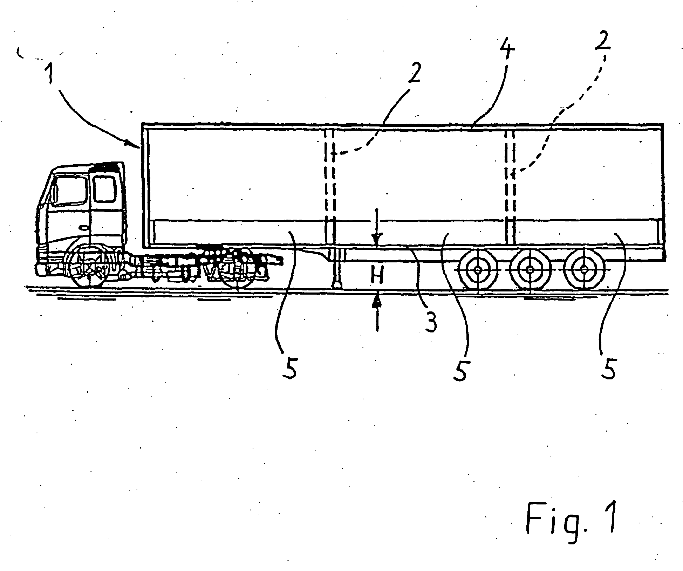

Fig. 1 zeigt ein Lastkraftfahrzeug mit einem kastenförmigen Ladeaufbau 1. Innerhalb der seitlichen Ladeöffnung befinden sich zwei oder mehr vertikale Rungen 2. Diese sind oben an einer Schiene 4 geführt, und unten auf Höhe des Ladebodens 3 des Aufbaus 1 verriegelbar. Sie lassen sich nach ihrer Entriegelung in Fahrzeuglängsrichtung verschieben, um so die zwischen Ihnen befindlichen Ladeöffnungen noch zusätzlich zu vergrößern. Zwischen den Rungen 2 sind die unteren Bereiche der Ladeöffnungen durch bewegliche Bordwände 5 verschlossen. Die Bordwände 5 sind über entsprechende Scharniere nach unten hin abklappbar. In hochgeschwenktem Zustand sind die Bordwände 5 an den Rungen verriegelbar, wozu zusätzliche Verriegelungselemente seitlich an den Rungen 2 befestigt sein können.

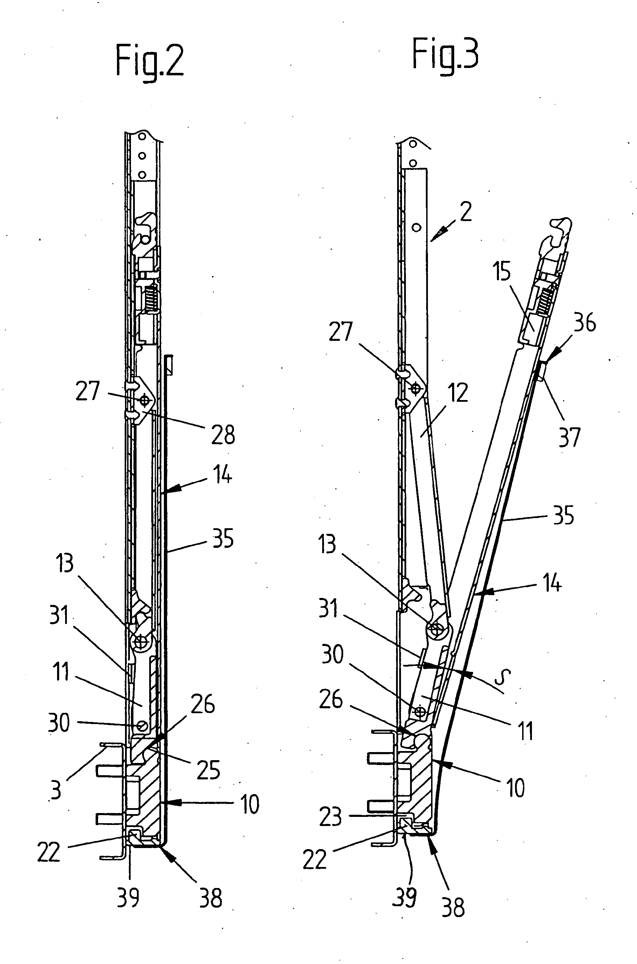

Die Fign. 2 und 3 zeigen den unteren Längsabschnitt einer der Rungen in einer Schnittansicht. In der Fig. 2 ist die Runge verriegelt dargestellt, wohingegen die Fig. 3 die Runge in teilweise entriegeltem Zustand wiedergibt. An ihrem oberen Ende ist jede Runge 2 in der Schiene 4 des Fahrzeugaufbaus 1 geführt, so dass sie sich in entriegeltem Zustand in dieser Schiene 4 hängend in Fahrzeuglängsrichtung verschieben lässt.

Die Befestigung des unteren Endes der Runge 2 erfolgt an einem Rungenhalter 10. Dieser ist gegen den Ladeboden 3 des Fahrzeugs verschraubt. Zur Verriegelung der Runge 2 an dem Rungenhalter 10 dient eine Kniehebelanordnung. Diese setzt sich unter anderem zusammen aus einem ersten Hebelarm 11 zwischen dem Rungenhalter 10 und einem Kniehebelgelenk 13, und einem zweiten Hebelarm 12 zwischen dem Kniehebelgelenk 13 und der Runge 2. Ein weiterer Bestandteil der der Verriegelung der Runge dienenden Hebelanordnung ist ein den Hebelarm 11 über das Kniehebelgelenk 13 hinaus verlängernder Hebel 14. Der Hebel 14 erstreckt sich im wesentlichen in Verlängerung und zur Betätigung des ersten Hebelarms 11 nach oben hin, und er ist mit dem Hebelarm 11 hinsichtlich der erzielbaren Schwenkbewegung gekoppelt. Allerdings kann zwischen der Schwenkbeweglichkeit des Hebels 14 und der Schwenkbeweglichkeit des Hebelarms 11 ein gewisses Spiel bestehen.

An seinem äußersten oberen Ende ist der Betätigungshebel 14 mit einem Handgriff 15 versehen. Aus Gründen zusätzlicher Sicherheit kann sich am Handgriff 15 oder im Bereich des Handgriffs 15 ein zusätzlich von Hand zu lösendes Sperrelement befinden, um ein versehentliches Lösen und Wegschwenken des Betätigungshebels 14 nach außen zu verhindern.

Die langgestreckte Runge 2 besteht vorzugsweise aus einem Metallprofil oder aus mehreren zusammengesetzten Metallprofilen. An ihrem unteren Ende ist an der Runge 2 ein Formschlusselement 22 befestigt oder ausgebildet. Dieses legt sich, wenn die Runge 2 angehoben wird, von unten gegen eine entsprechende Formschlusskontur 23 des fahrzeugfesten Rungenhalters 10, wodurch die Runge in diesem angehobenen Zustand formschlüssig an dem Rungenhalter 10 verriegelt. Das hierfür erforderliche Anheben der Runge erfolgt durch die Hebelanordnung 11, 12, 13, 14. Deren erster Hebelarm 11 ist unten mit einer Lagerschale 25 versehen. Über die Lagerschale 25 stützt sich der Hebelarm 11 auf einer korrespondierenden, teilzylindrischen Lagerkontur des Rungenhalters 10 ab. Auf diese Weise bildet die Lagerschale 25 zusammen mit der entsprechenden Lagerkontur ein Gelenk 26 zwischen erstem Hebelarm 11 und Rungenhalter 10. Dieses Gelenk 26 ist trennbar, d. h. die Lagerschale 25 lässt sich vollständig von der Lagerkontur des Rungenhalters 10 lösen, um dann die Runge komplett über den Rungenhalter 10 hinweg nach außen wegschwenken zu können. Dies ist erforderlich, um sodann die gesamte Runge 2 in Fahrzeuglängsrichtung zu verschieben.

Die beiden Hebelarme 11, 12 stehen über das Kniehebelgelenk 13 in gelenkiger Verbindung. Der obere Hebelarm 12 stützt sich andererseits an einem Gelenkpunkt 27 ab. Dieser befindet sich an einer in der Runge 2 angebrachten Lasche 28. Wird in der in Fig. 3 dargestellten Ausgangsstellung die Kniehebelanordnung durchgedrückt, d. h. unter Streckung der nach außen angewinkelten Hebelarme 11, 12, führt dies zu einer Verlagerung der Runge nach oben, und damit zu der bereits beschriebenen Verriegelung des ganz unten an der Runge angeordneten Formschlusselements 22 an der Formschlusskontur 23 des Rungenhalters 10. Die für die Streckung der Kniehebelanordnung erforderliche Kraft wird durch den mit dem Handgriff 15 versehenen Hebel 14 aufgebracht. Dieser ist über eine Schwenkachse 30 mit dem dahinter angeordneten Hebelarm 11 verbunden.

Im Endzustand, wie er in Fig. 2 wiedergegeben ist, ist die Hebelanordnung überstreckt. Dabei befindet sich das Kniehebelgelenk 13 des Kniehebels weiter fahrzeugeinwärts, als die Verbindungsgerade zwischen Gelenk 26 und Gelenkpunkt 27. Bei der Stellung gemäß Fig. 3 hingegen sind die Verhältnisse noch umgekehrt. Bei überstreckter Kniehebelanordnung gemäß Fig. 2 liegt daher eine Übertotpunktsicherung des Kniehebelgelenks 13 vor, unter normalen Umständen kann es zu keinem Lösen der Kniehebelanordnung kommen.

Um in der Praxis die Entriegelung der Runge zu erleichtern, ist der als Betätigungsarm dienende Hebel 14 nicht starr zu dem Hebelarm 11, sondern über die Schwenkachse 30 geringfügig schwenkbar zu dem Hebelarm 11. Die Schwenkachse 30 befindet sich relativ weit unten an dem ersten Hebelarm 11 in Nähe zu der Lagerschale 25. Jedoch ist die Verschwenkbarkeit des Betätigungshebels 14 relativ zu dem ersten Hebelarm 11 nur gering. Der mögliche Schwenkweg S ist durch einen Schwenkwegbegrenzer 31 auf 1° bis 10° begrenzt.

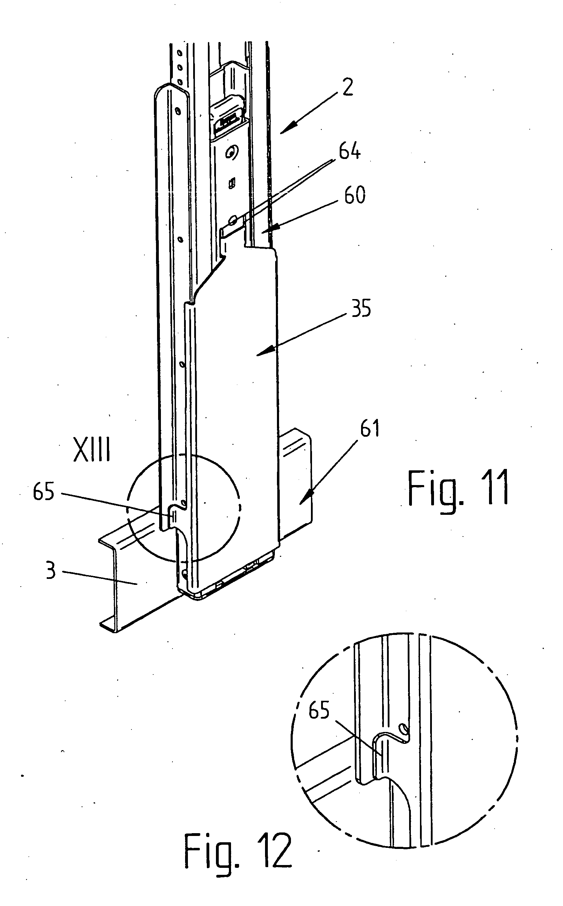

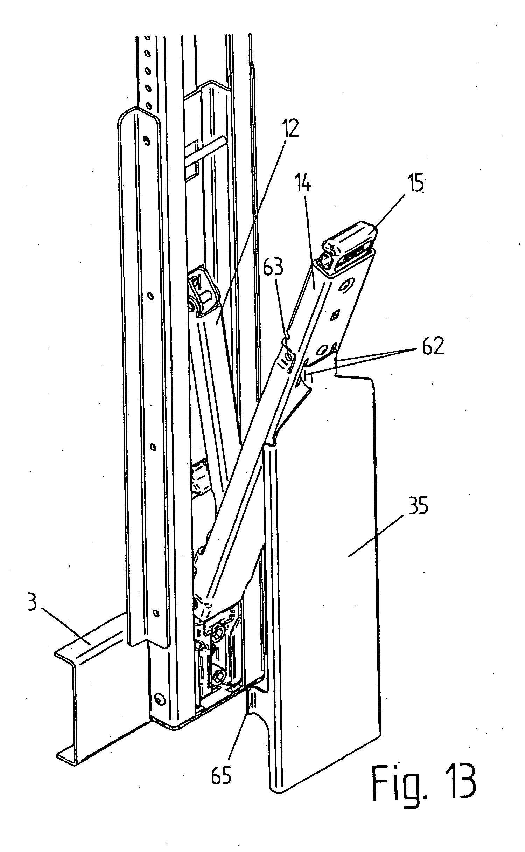

Zum Schutz der Runge gegen Witterungseinflüsse, Streusalz etc. ist der untere Längsabschnitt der Runge nach außen hin durch ein Schutzelement 35 abgedeckt. Das Schutzelement 35 verhindert ferner, dass Regenwasser oder auch Spritzwasser im Bereich der Runge nach fahrzeuginnen gelangen und dort zu Feuchteschäden an der Ladung führen kann. Bei den Ausführungsbeispielen gemäß den Fign. 2 bis 10 besteht das Schutzelement 35 über seine gesamte Länge aus einem biegsamen Material. Im Gegensatz dazu besteht das Schutzelement 35 gemäß den Ausführungsbeispielen in den Fign. 11 bis 18 über seine gesamte Länge aus einem starren Material.

Der obere Rand 36 des in den Fign. 2 bis 5 dargestellten Schutzelements 35 ist mittels einer aufgesetzten Leiste 37 auf der Außenseite des Hebels 14 befestigt, vorzugsweise knapp unterhalb des Handgriffs 15. Im Bereich seines unteren Randes 38 ist das Schutzelement 35 um das untere Ende der Runge 2 herumgeführt, und an deren nach unten weisender Stirnseite 39 befestigt. Auch zur Befestigung dieses unteren Randes 38 an der Stirnseite 39 kann eine von außen aufgesetzte Leiste vergleichbar der Leiste 37 hilfreich sein. Die Befestigung sowohl des oberen wie auch des unteren Randes erfolgt im Übrigen durch Vernieten, wobei der Niet 34 auch die jeweilige, aufgesetzte Leiste 37 durchsetzt.

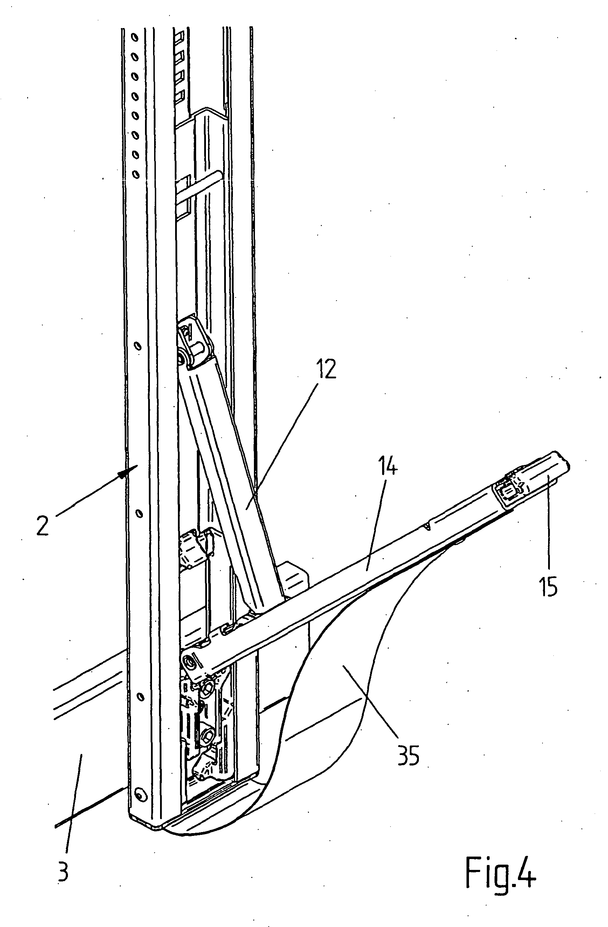

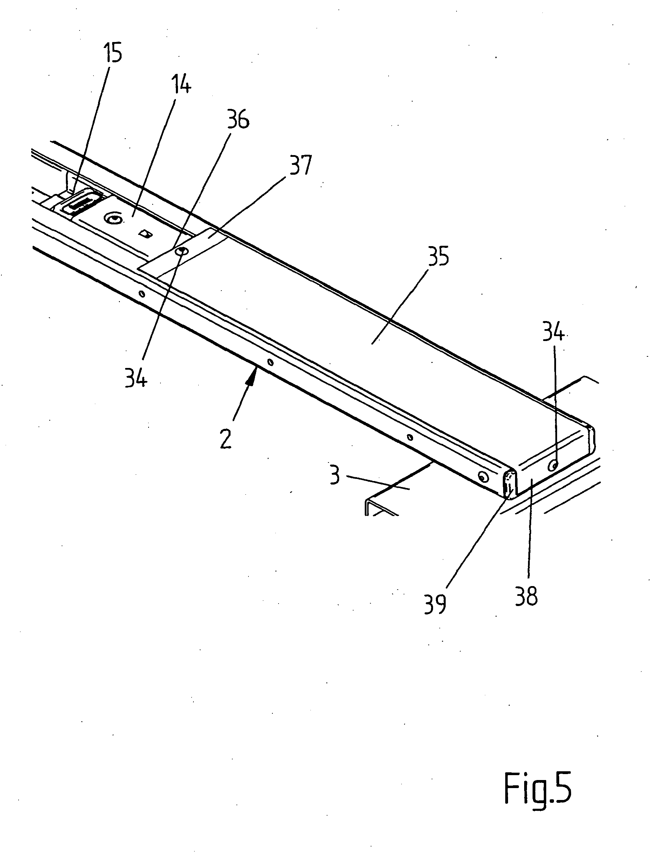

Bei der Ausführungsform nach den Fign. 2 bis 5 ist die Abdeckung 35 ein insgesamt flacher und bandförmiger Streifen aus Gummi oder aus einem ähnlich biegsamen oder krümmbaren Material. Auf diese Weise kann sich die Abdeckung 35 bei entriegelter Runge (Fig. 4) über ihre ganze Länge biegen oder krümmen, und sich auf diese Weise gut dem Aufschwenken des Betätigungshebels 14 anpassen. Bei geschlossener Runge, wie dies in den Fign. 2 und 5 dargestellt ist, ist die Abdeckung 35 gestreckt und deckt die Außenseite der Runge 2 flächig und vollständig ab. Spritzwasser und Schmutz kann nicht in der Bereich der empfindlichen Gelenke der dahinter angeordneten Hebelanordnung gelangen.

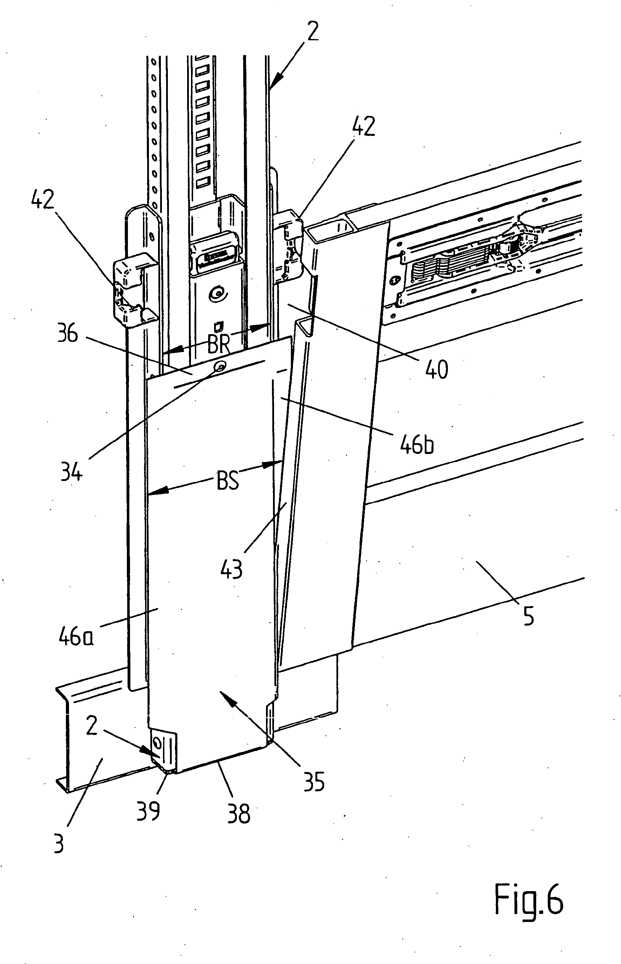

Eine andere Ausführungsform für die Abdeckung der Runge ist in Fig. 6 dargestellt. Zusätzlich eingezeichnet ist hier die seitlich neben der Runge 2 verriegelbare, benachbarte Bordwand 5. Wieder wird das als Abdeckung dienende Schutzelement 35 durch einen über seine ganze Länge verformbaren Streifen aus Gummi gebildet. Jedoch übersteigt in diesem Fall die Breite BS des Schutzelements 35 die Breite BR des durch das Schutzelement 35 abgedeckten Rungenabschnitts. Unter Ausbildung von Randabschnitten 46a, 46b ist in diesem Fall die Breite BS des Schutzelements größer, als die Summe aus der Breite BR des durch das Schutzelement abgedeckten Rungenabschnitts und der Breiten der beiderseits der Runge 2 angeordneten Spalte 40. Die Spalte 40 bestehen zu den angrenzenden Bordwänden 5. Für die Praxis ist es sinnvoll, wenn das Schutzelement 35 mit einem Randabschnitt 46a bzw. 46b in einer Breite von 15 bis 20 mm über die Breite BR der Runge 2 übersteht.

Wird die jeweilige Bordwand 5 hochgeschwenkt und an Verriegelungselementen 42, die von der Seite her an der Runge 2 befestigt sind, verriegelt, so nimmt beim Hochschwenken der seitliche Rand 43 der Bordwand 5 den jeweiligen Randabschnitt 46a, 46b mit, und biegt diesen flexibel nach innen. Auf diese Weise kommt es zu einer Abdichtung des biegsamen Schutzelements 35 gegen den Rand 43 der Bordwand 5. In der Praxis befindet sich dieser Rand 43, wie auch in Fig. 6 dargestellt, an einem für eine solche zusätzliche Abdichtung günstigen Metallprofil.

Es wird daher ein mehrfacher Vorteil erzielt. Nicht nur deckt das verformbare Schutzelement 35 die dahinter angeordnete Runge 2 ab, sondern es erfolgt zusätzlich auch eine Abdichtung gegenüber der Bordwand 5. Spritzwasser und Schmutz kann also nicht mehr ohne weiteres zwischen der Runge 2 und der jeweils angrenzenden Bordwand 5 hindurchtreten. Ferner verhindern die nach innen gebogenen Randabschnitte 46a, 46b, dass der Fahrtwind von der Seite her unter das Schutzelement 35 greift und dieses von der Runge abhebt oder im Fahrtwind flattert.

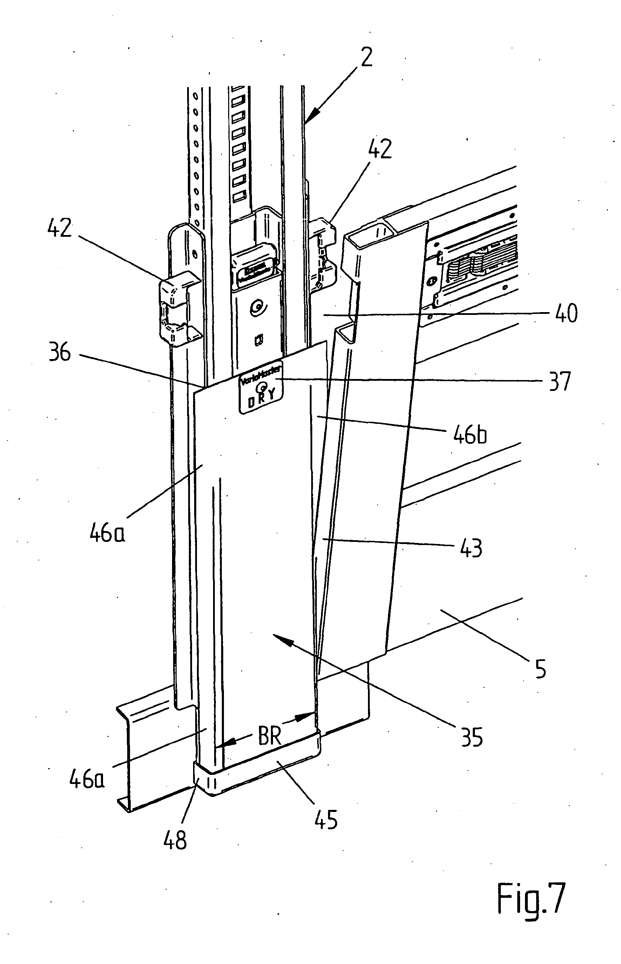

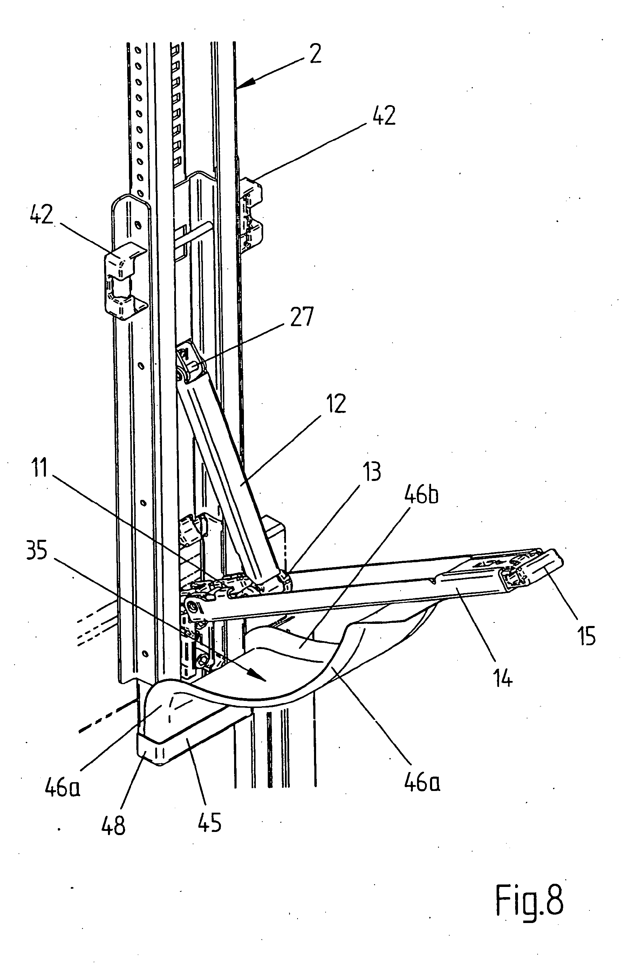

Bei der Ausführungsform nach den Fign. 7 und 8 weist das Schutzelement 35 ebenfalls die bereits beschriebene Überbreite auf, um beim Anklappen der Bordwand 5 eine zusätzliche Abdichtung bereitzustellen. Zusätzlich ist das Schutzelement 35 im Bereich seines unteren Randes 38 um das untere Rungenende herum gezogen, und zur Befestigung mit einem Winkelstück oder hier einer Kappe 45 versehen. Diese ist auf der nach unten weisenden Stirnseite 39 der Runge (vgl. Fig. 5) vernietet. Da die Kappe 45 auch seitlich Flächen 48 aufweist, bewirkt sie in diesem Bereich ein Anliegen der Randabschnitte 46a, 46b des Schutzelements 35 an den jeweiligen Seiten der Runge 2. Dies trifft jedoch nur auf diesen unteren Bereich des Schutzelements 35 zu, wohingegen sich die elastischen Randabschnitte 46a, 46b nach oben hin frei ausstellen können, und sie dort erst durch Schließen der Bordwände 5 angelegt werden.

Von Vorteil ist es, wenn der obere Rand 36 der Abdeckung mittels der bereits beschriebenen Leiste 37 befestigt ist, z.B. mit dem Niet 34. Die Leiste 37 sollte in ihrer Breite kürzer als die gesamte Breite BS des darunter angeordneten Schutzelements 35 sein, aber auch nicht länger als die Breite BR des abgedeckten Rungenabschnitts. Auf diese Weise verhindert die Leiste 37, dass sich bei nach innen umgebogenen Randabschnitten 46a, 46b aufgrund der Biegekräfte der obere Rand 36 des Schutzelements 35 aufwölbt, und hier Schmutz oder Regenwasser von oben her eindringen kann.

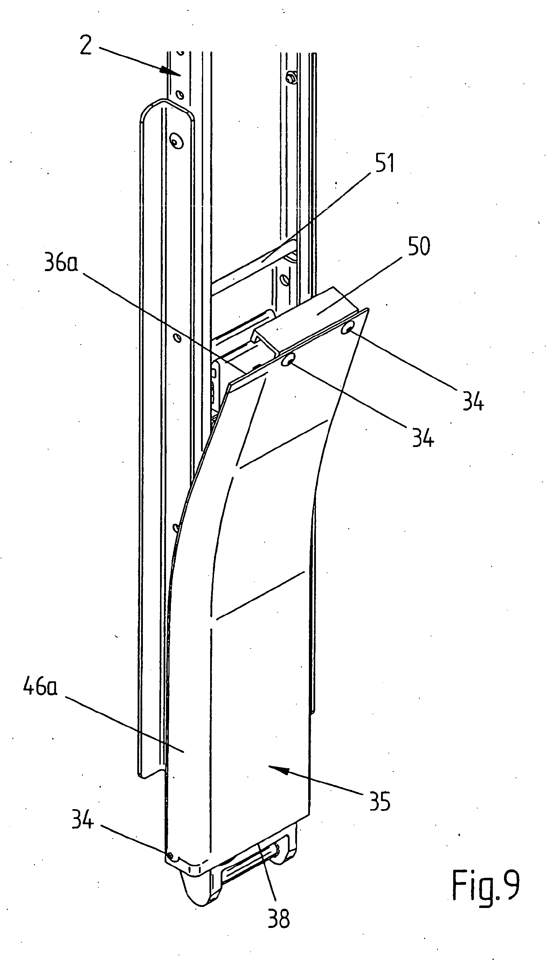

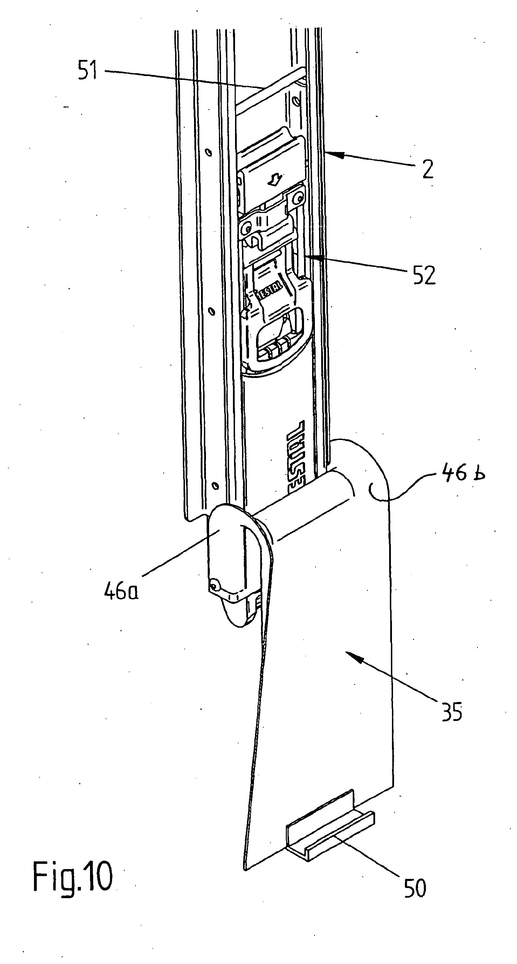

Bei der Ausführungsform nach den Fign. 9 und 10 erfolgt die Befestigung des biegsamen Schutzelements 35 sowohl mit seinem unteren Rand 38, wie mit seinem oberen Rand 36a an der Runge 2 selbst. Hierbei ist der untere Rand 38 dauerhaft an den Seiten der Runge befestigt, etwa mittels zweier durch die angeklappten Randabschnitte 46a, 46b hindurch gesetzter Niete 34. Demgegenüber ist der obere Rand 36a der Abdeckung von Hand in die Runge 2 einhängbar. Hierzu ist am oberen Rand 36a ein als Befestigungshaken 50 dienendes Profil befestigt, welches sich an einem Querstück 51, hier einem Querbolzen, der Runge 2 einhängen läßt.

Im Gegensatz zu den zuvor anhand der Fign. 2 bis 8 beschriebenen Ausführungen legt sich das Schutzelement 35 beim Schließen der Hebelanordnung 11, 12, 14 nicht selbsttätig an den Längsabschnitt der Runge 2 an. Es ist erforderlich nach Schließen der Hebelanordnung 11, 12, 14 das Schutzelement 35 von Hand an dem Querstück 51 der Runge einzuhängen, wodurch die Anlage des Schutzelements 35 am Längsabschnitt der Runge 2 erreicht wird. Da das Schutzelement 35 gemäß den Fign. 9 und 10 damit nicht von der Geometrie der verwendeten Hebel 11, 12, 14 abhängig ist, eignet es sich insbesondere als Nachrüstlösung bei Rungen ohne Schutzelement.

Vor dem Öffnen bzw. Entriegeln der Runge 2 muß also zunächst der obere Rand 36a des Schutzelements 35 ausgehängt werden. Das Schutzelement 35 einschließlich seiner sich auf dem größten Teil ihrer Länge nach außen weg wölbenden Randabschnitte 46a, 46b hängt dann schlaff herunter, wie in Fig. 10 dargestellt. Auf diese Weise liegen die dahinter angeordneten Verriegelungselemente 52 der Runge 2 frei. Die Wiederherstellung der Abdeckung erfolgt in umgekehrter Reihenfolge.

Ein bevorzugtes Material für die in den Fign. 2 bis 10 dargestellte Abdeckung 35 ist mechanisch widerstandsfähiges, wetterfestes und weitgehend UV-beständiges Gummi. Jedoch sind auch andere Materialien verwendbar, soweit sie diese Eigenschaften aufweisen und sie entlang ihrer Erstreckung und einschließlich ihrer beiderseitigen Randabschnitte in mindestens einem Verformungsbereich verformbar sind.

Bei den in den Fign. 11 bis 18 dargestellten Schutzelementen 35 ist ein solcher Verformungsbereich nicht vorgesehen. Das Schutzelement 35 gemäß diesen Ausführungen besteht aus einem starren Material, vorzugsweise Aluminium. Denkbar sind jedoch auch andere metallische und auch starre Elastomer- Materialien sowie Kunststoffe.

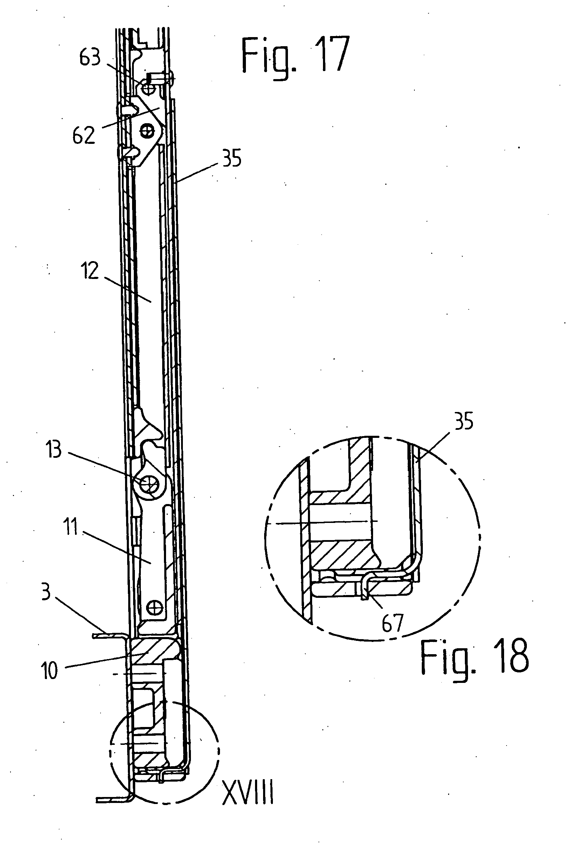

Bei der Runge gemäß den Fign. 11 bis 18 ist das starre Schutzelement 35 im Bereich seines oberen Endes 60 an dem Hebel 14 der Hebelanordnung schwenkbeweglich befestigt. Das obere Ende 60 des Schutzelements 35 ist hierzu mit rechtwinklig abgewinkelten Laschen 62 versehen, die in schlitzförmige Öffnungen 64 des Hebels 14 von Fahrzeug außen her eingesteckt sind. Die Laschen 62 sind kürzer als die Schlitze 64, so dass sich die Laschen 62 innerhalb der Schlitze 64 hin- und herbewegen können. Um ein Herausrutschen der Laschen 62 aus den Schlitzen 64 zu verhindern, weist das Schutzelement 35 einen sich zwischen den Laschen 62 erstreckenden Sicherungsbolzen 63 auf, der sich auf der fahrzeuginneren Seite des Hebels 14 befindet, vgl. Fig. 17. Auf diese Weise ist das Schutzelement 35 bzw. dessen oberes Ende 60 gelenkig gegenüber dem Hebel 14 befestigt, gleichzeitig aber auch in Längsrichtung des Hebels 14 bewegbar.

Darüber hinaus sitzt das obere Ende 60 des Schutzelements 35 bzw. die Laschen 62 auch schwenkbeweglich in den Öffnungen 64. Mit seinem unteren Ende 61 liegt das in den Fign. 11 bis 13 dargestellte Schutzelement 35 frei von außen gegen die Runge an und schwenkt beim Öffnen der Hebelanordnung 11, 12, 14 von dieser weg nach fahrzeugaußen, wobei das unter der Schwerkraft herabhängende Schutzelement 35 unabhängig vom Schwenkwinkel des Hebels 14 stets eine in etwa vertikale Stellung beibehält. Beim Schließen der Hebelanordnung 11, 12, 14 verringert sich der Schwenkwinkel zwischen dem oberen Ende 60 und dem Hebel 14, wodurch sich das Schutzelement 35 der Runge 2 annähert, bis es schließlich gemäß der Darstellung in Fig. 11 an dieser anliegt. Zur Sicherung des unteren Endes 61 des Schutzelements 35 ist dieses dort seitlich mit winkelförmigen Mitnahmeelementen 65 versehen. Von den schwenkbaren Bordwänden 5 (vgl. Darstellung in Fig. 6) werden die laschenförmigen Mitnahmeelemente 65 mitgenommen bzw. nach innen gedrückt, so dass das Schutzelement 35 von außen her gegen die Runge 2 anliegt, und in dieser Stellung durch die Bordwand verriegelt ist.

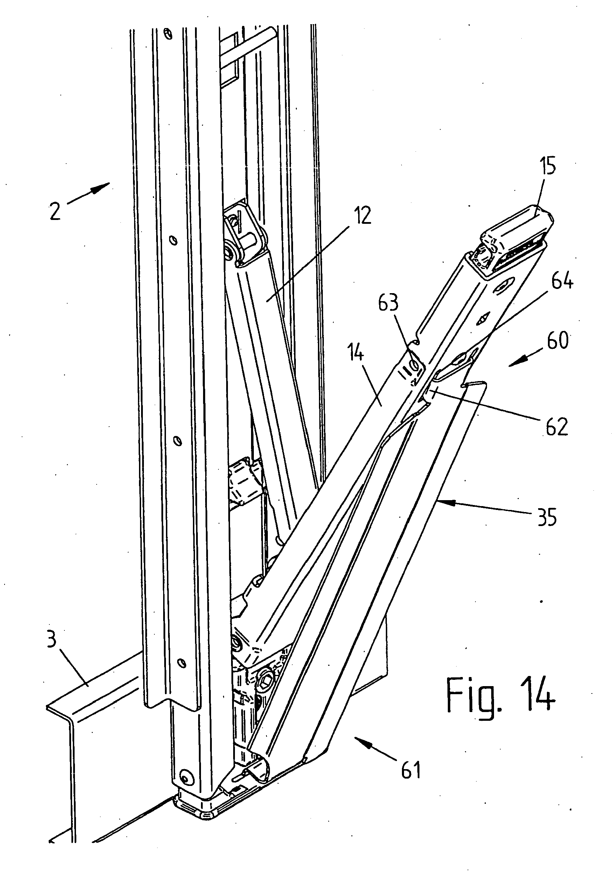

Die in den Fign. 14 bis 18 dargestellte Runge 2 unterscheidet sich von der Runge 2 gemäß den Darstellungen in den Fign. 11 bis 13 aufgrund des unteren Endes 61 des Schutzelements 35. Die Befestigung des oberen Endes 60 des Schutzelements 35 ist analog zu der zuvor beschriebenen Ausführung. Während nämlich bei der Ausführung nach Fig. 11 bis 13 ein Längenausgleich, wie dieser bei den zuvor anhand der Fign. 2 bis 10 beschriebenen Ausführungen durch den Verformungsbereich erreicht wird, aufgrund des Wegschwenkens des unteren Endes 61 des Schutzelements 35 nicht erforderlich ist, bleibt das untere Ende 61 bei der Ausführung nach Fig. 14 bis 18 auch beim Öffnen der Hebelanordnung im unteren Bereich der Runge 2 arretiert.

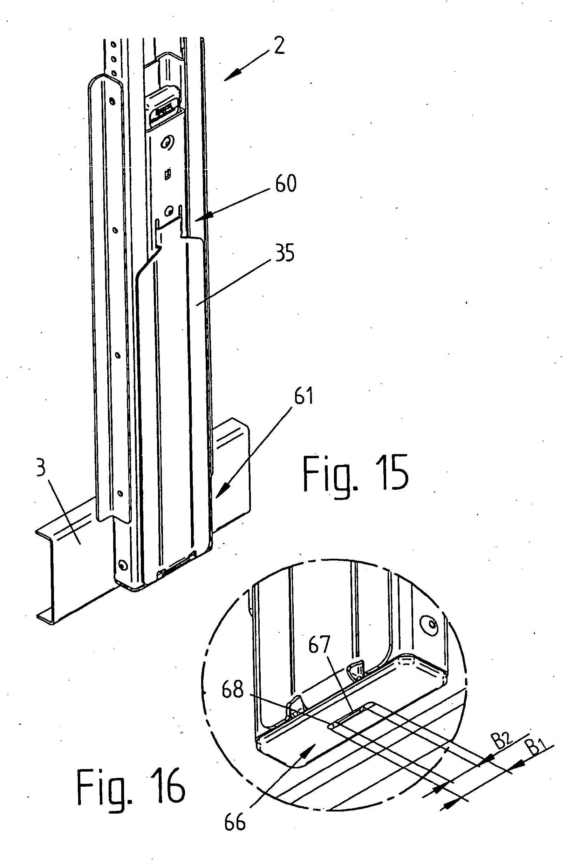

Im Bereich des unteren Endes 61 des Schutzelements 35 ist eine schwenkbewegliche Steckverbindung 66 vorgesehen. Diese besteht aus einer in der Runge 2 vorgesehenen Öffnung 68 und einem in diese eingesteckten Einsteckelement 67. Das Einsteckelement 67 ist, wie insbesondere die Darstellungen in Fig. 17 und 18 erkennen lassen, durch eine doppelte Abwinklung am unteren Ende des Schutzelements 35 gebildet. Die Materialstärke des Einsteckelements 67 ist so gewählt, dass nach vorne und hinten ein gewisses Spiel in der Öffnung 68 verbleibt, so dass das Einsteckelement 67 mit der Öffnung 68 eine schwenkbewegliche Steckverbindung bildet, vgl. Fign. 14, 16. Darüber hinaus ist die Breite B₁ der Öffnung 68 größer gewählt als die Breite B₂ des Steckelements 67.

Beim Öffnen der Kniehebelanordnung schwenkt das obere Ende 60 gemeinsam mit dem Hebel 14 nach fahrzeugaußen. Das untere Ende 61 des Schutzelements 35 wird unter Beibehaltung der Steckverbindung 66 ebenfalls verschwenkt, so dass das Schutzelement 35 in der in Fig. 14 dargestellten Endstellung eine gegenüber der Vertikalen geneigte Position einnimmt.

Aufgrund der sich beim Öffnen der Hebelanordnung ändernden Längenverhältnisse ist bei dieser Ausführungsform ein Längenausgleich erforderlich. Dieser ist dadurch realisiert, dass die Laschen 62 so dimensioniert sind, dass sie relativ zu den Schlitzen 64 beweglich sind. In der geschlossenen Stellung gemäß Fig. 15 befinden sich die Laschen 62 in ihrer unteren Stellung, wobei sie mit zunehmendem Öffnen der Hebelanordnung in den Schlitzen 64 nach oben wandern.

Wie sich den Schnittdarstellungen in den Fign. 17 und 18 entnehmen lässt, kann das Schutzelement 35 beim Schließen der Hebelanordnung und dem damit verbundenen Anheben der Runge 2 von unten gegen den Rungenhalter 10 gedrückt werden. Hierdurch werden im Fahrbetrieb Klappergeräusche des Schutzelements 35 unterdrückt.

Wie sich insbesondere den Darstellungen in Fig. 16 und 18 entnehmen lässt, handelt es sich bei dem am unteren Ende 61 des Schutzelements 35 vorgesehenen Einsteckelement 67 um eine einstückige Abbiegung des Schutzelements 35. Das Schutzelement 35 ist mit Ausnahme des Bolzens 63 als Blech-Umformteil, beispielsweise aus Aluminium, in einem Stück herstellbar.

### Bezugszeichen

| | | | |
|---|---|---|---|
| 1 | Fahrzeugaufbau | 50 | Haken |
| 2 | Runge | 51 | Querstück |
| 3 | Ladeboden | 52 | Verriegelungselemente |
| 4 | Schiene | 60 | oberes Ende |
| 5 | Bordwand | 61 | unteres Ende |
| 10 | Rungenhalter | 62 | Befestigungselement, Lasche |
| 11 | Hebelarm | 63 | Befestigungselement, Bolzen |
| 12 | Hebelarm | 64 | Befestigungselement, Öffnung |
| 13 | Kniehebelgelenk | 65 | Mitnahmeelement |
| 14 | Hebel | 66 | Steckverbindung |
| 15 | Handgriff | 67 | Einsteckelement |
| 22 | Formschlusselement | 68 | Öffnung |
| 23 | Formschlusskontur | | |
| 25 | Lagerschale | BS | Breite Schutzelement |
| 26 | Gelenk | BR | Breite Runge |
| 27 | Gelenkpunkt | S | Schwenkweg |
| 28 | Lasche | B₁ | Breite |
| 30 | Schwenkachse | B₂ | Breite |
| 31 | Schwenkwegbegrenzer | | |
| 34 | Niet | | |
| 35 | Schutzelement | | |
| 36 | oberer Rand des Schutzelementes | | |
| 36a | oberer Rand des Schutzelementes | | |
| 37 | Leiste | | |
| 38 | unterer Rand des Schutzelementes | | |
| 39 | Stirnseite der Runge | | |
| 40 | Spalt | | |
| 42 | Verriegelungselement | | |
| 43 | Rand | | |
| 45 | Kappe | | |
| 46a | Randabschnitt | | |
| 46b | Randabschnitt | | |
| 48 | Seitenfläche | | |

## Patentansprüche

1. Runge für eine Ladeöffnung eines Fahrzeugaufbaus, welche in ihrem unteren Teil mit einer Hebelanordnung (11, 12, 14) zum Verriegeln der Runge (2) an einem fahrzeugfesten Rungenhalter (10) und mit einem Schutzelement (35) versehen ist, **dadurch gekennzeichnet dass**, in der Verriegelungsstellung der Runge (2), durch das Schutzelement (35) ein dahinter angeordneter Längsabschnitt der Runge (2) nach außen hin abdeckt ist, wobei die Breite des Schutzelements (35) mindestens gleich ist der Breite (BR) der Runge (2) in dem durch das Schutzelement (35) abgedeckten Rungenabschnitt.

2. Runge nach Anspruch 1, **dadurch gekennzeichnet, dass** sich das Schutzelement (35) beim Schließen der Hebelanordnung (11, 12, 14) selbsttätig an den Längsabschnitt der Runge (2) legt.

3. Runge nach Anspruch 1 und/oder Anspruch 2, **dadurch gekennzeichnet, dass** das Schutzelement entlang seiner Erstreckung mindestens einen Verformungsbereich aufweist.

4. Runge nach einem der Ansprüche 1 bis 3, **dadurch gekennzeichnet, dass** sich das Schutzelement (35) zwischen dem unteren Ende der Runge (2) und einem Hebel (14) der Hebelanordnung erstreckt.

5. Runge nach Anspruch 4, **dadurch gekennzeichnet, dass** ein unterer Rand (38) des Schutzelements (35) an der Runge (2), und ein oberer Rand (36) des Schutzelements an einem Hebel (14) der Hebelanordnung befestigt ist, der schwenkbeweglich gegen den Rungenhalter (10) abgestützt ist.

6. Runge nach Anspruch 5, **dadurch gekennzeichnet, dass** der obere Rand (36) auf der Außenseite des Hebels (14) befestigt ist, vorzugsweise durch Vernieten.

7. Runge nach Anspruch 5 oder Anspruch 6, **dadurch gekennzeichnet, dass** das Schutzelement (35) im Bereich seines unteren Randes (38) um das untere Ende der Runge (2) herumgeführt, und an deren nach unten weisender Stirnseite (39) befestigt ist, vorzugsweise durch Vernieten.

8. Runge nach Anspruch 7, **dadurch gekennzeichnet, dass** das Schutzelement (35) im Bereich seiner Herumführung um das untere Ende der Runge (2) durch ein Winkelelement oder eine Kappe (45) abgedeckt ist.

9. Runge nach Anspruch 8, **dadurch gekennzeichnet, dass** im Falle des Vernietens des unteren Randes (38) der Niet das Winkelelement bzw. die Kappe (45) durchsetzt.

10. Runge nach einem der vorangehenden Ansprüche, **dadurch gekennzeichnet, dass** das Schutzelement (35) eine Abdeckung aus einem flachen, insgesamt biegsamen Material ist.

11. Runge nach Anspruch 10, **dadurch gekennzeichnet, dass** das Schutzelement (35) aus einer Bahn aus Gummi besteht.

12. Runge nach einem der Ansprüche 10 oder 11, **dadurch gekennzeichnet, dass** die Breite (BS) des Schutzelementes größer ist als die Summe aus der Breite (BR) des durch das Schutzelement abgedeckten Rungenabschnittes und der Breiten der beiderseits der Runge (2) angeordneten Spalte (40) zu den angrenzenden, beweglichen Bordwänden (5).

13. Runge nach Anspruch 12, **dadurch gekennzeichnet, dass** auf den oberen Rand (36) des Schutzelementes (35) von außen eine Leiste (37) aufgesetzt ist, die kürzer ist als die Breite (BS) des darunter angeordneten Schutzelementes (35), und nicht länger als die Breite (BR) der Runge (2) in dem abgedeckten Rungenabschnitt.

14. Runge nach Anspruch 1, **dadurch gekennzeichnet, dass** ein unterer Rand (38) des Schutzelements (35) an der Runge (2) befestigt ist, und ein oberer Rand (36a) des Schutzelements an der Runge (2) einhängbar ist.

15. Runge nach Anspruch 14, **dadurch gekennzeichnet, dass** das Schutzelement (35) im Bereich seines oberen Randes (36a) mit einem Haken (50) versehen ist, der an einem Querstück (51) der Runge (2) einhängbar ist.

16. Runge nach Anspruch 1 oder 2, **dadurch gekennzeichnet, dass** das Schutzelement (35) starr ist und im Bereich seines oberen Endes (60) an einem Hebel (14) der Hebelanordnung befestigt ist.

17. Runge nach Anspruch 16, **dadurch gekennzeichnet, dass** das obere Ende (60) des Schutzelements (35) mit Verbindungselementen (62, 63) versehen ist, die mit an dem Hebel (14) vorgesehenen Verbindungselementen (64) zusammenwirken.

18. Runge nach Anspruch 17, **dadurch gekennzeichnet, dass** die Verbindungselemente (62, 63) des Schutzelements (35) gegenüber den Verbindungselementen (64) des Hebels (14) unter Beibehaltung der Verbindung beweglich sind.

19. Runge nach einem der Ansprüche 17 und/oder 18, **dadurch gekennzeichnet, dass** die Verbindungselemente des Hebels (14) sich in dessen Längsrichtung erstreckende Schlitze (64) sind, und dass die Verbindungselemente des Schutzelements (35) in diese Schlitze eingesteckbare Laschen (62) und einen die Laschen (62) miteinander verbindenden Bolzen (63) aufweisen.

20. Runge nach einem der Ansprüche 16 bis 19, **dadurch gekennzeichnet, dass** das Schutzelement (35) im Bereich seines unteren Endes (61) gegen die Runge (2) schwenkbar und dort festlegbar ist.

21. Runge nach Anspruch 20, **dadurch gekennzeichnet, dass** das Sicherungselement (35) seitlich mit mindestens einem Mitnahmeelement (65) zur Mitnahme durch eine gegenüber der Runge (2) schwenkbeweglich angeordnete Bordwand (5) versehen ist.

22. Runge nach einem der Ansprüche 15 bis 18, **dadurch gekennzeichnet, dass** das Schutzelement (35) im Bereich seines unteren Endes (61) über eine schwenkbewegliche Steckverbindung (66) gegenüber der Runge (2) festgelegt ist.

23. Runge nach Anspruch 22, **dadurch gekennzeichnet, dass** die Steckverbindung (66) aus einem an dem Schutzelement (35) vorgesehenen Einsteckelement (67) und einer an der Runge (2) vorgesehenen Öffnung (68) besteht.

24. Runge nach Anspruch 23, **dadurch gekennzeichnet, dass** das Einsteckelement (67) eine einstückige Abbiegung des Schutzelements (35) ist.

25. Runge nach einem der Ansprüche 15 bis 24, **dadurch gekennzeichnet, dass** das Schutzelement (35) ein Blechformteil, insbesondere ein Aluminiumformteil, ist.

## Claims

1. A stanchion for a loading opening of a vehicle superstructure, which is provided in the lower part thereof with a lever arrangement (11, 12, 14) for locking the stanchion (2) to a stanchion holder (10) fixed with respect to the vehicle and with a protection element (35), **characterized in that** in the locked setting of the stanchion (2) a longitudinal portion of the stanchion (2) situated behind the protection element (35) is covered towards the outside by the latter, wherein the width of the protection element (35) is at least equal to the width (BR) of the stanchion (2) in the stanchion portion covered by the protection element (35).

2. A stanchion according to Claim 1, **characterized in that** when the lever arrangement (11, 12, 14) is closed the protection element (35) automatically rests against the longitudinal portion of the stanchion (2).

3. A stanchion according to Claim 1 and/or Claim 2, **characterized in that** the protection element has at least one deformation region along its extension.

4. A stanchion according to any one of Claims 1 to 3, **characterized in that** the protection element (35) extends between the lower end of the stanchion (2) and a lever (14) of the lever arrangement.

5. A stanchion according to Claim 4, **characterized in that** a lower edge (38) of the protection element (35) is fastened to the stanchion (2), and an upper edge (36) of the protection element (35) is fastened to a lever (14) of the lever arrangement which is supported against the stanchion holder (10) in a pivotably movable manner.

6. A stanchion according to Claim 5, **characterized in that** the upper edge (36) is fastened to the outside of the lever (14), for example by riveting.

7. A stanchion according to Claim 5 or Claim 6, **characterized in that** in the region of its lower edge (38) the protection element (35) is passed around the lower end of the stanchion (2) and it is fastened, preferably by riveting, to the end face (39) thereof facing downwards.

8. A stanchion according to Claim 7, **characterized in that** in the region of its passing around the lower end of the stanchion (2) the protection element (35) is covered by an angle element or a cap (45).

9. A stanchion according to Claim 8, **characterized in that** in the case of riveting of the lower edge (38) the rivet passes through the angle element or the cap (45) respectively.

10. A stanchion according to any one of the preceding Claims, **characterized in that** the protection element (35) is a covering consisting of a flat material which is flexible as a whole.

11. A stanchion according to Claim 10, **characterized in that** the protection element (35) consists of a strip of rubber.

12. A stanchion according to one of Claims 10 or 11, **characterized in that** the width (BS) of the protection element is greater than the sum of the width (BR) of the portion of the stanchion covered by the protection element and the widths of the gaps (40) present on both sides of the stanchion (2) from the adjacent movable side walls (5).

13. A stanchion according to Claim 12, **characterized in that** a strip (37), which is shorter than the width (BS) of the protection element (35) situated below it and which is not longer than the width (BR) of the stanchion (2) in the covered portion of the stanchion, is placed on the upper edge (36) of the protection element (35) from the outside.

14. A stanchion according to Claim 1, **characterized in that** a lower edge (38) of the protection element (35) is fastened to the stanchion (2), and an upper edge (36a) of the protection element is capable of being suspended on the stanchion (2).

15. A stanchion according to Claim 14, **characterized in that** the protection element (35) is provided in the region of the upper edge (36a) thereof with a hook (50) which is capable of being suspended on a transverse member (51) of the stanchion (2).

16. A stanchion according to Claim 1 or 2, **characterized in that** the protection element (35) is rigid and is fastened in the region of the upper end (60) thereof on a lever (14) of the lever arrangement.

17. A stanchion according to Claim 16, **characterized in that** the upper end (60) of the protection element (35) is provided with connecting elements (62, 63) which co-operate with connecting elements (64) provided on the lever (14).

18. A stanchion according to Claim 17, **characterized in that** the connecting elements (62, 63) of the protection element (35) are movable with respect to the connecting elements (64) of the lever (14) whilst retaining the connection.

19. A stanchion according to any one of Claims 17 and/or 18, **characterized in that** the connecting elements of the lever (14) are slots (64) extending in the longitudinal direction thereof, and the connecting elements of the protection element (35) are fastening plates (62) capable of being inserted into these slots and a pin (63) connecting the fastening plates (62) to one another.

20. A stanchion according to any one of Claims 16 to 19, **characterized in that** in the region of the lower end (61) thereof the protection element (35) is pivotable towards the stanchion (2) and is capable of being fixed there.

21. A stanchion according to Claim 20, **characterized in that** the securing element (35) is provided on the side with at least one entrainment element (65) for entrainment by a side wall (5) arranged in a pivotably movable manner with respect to the stanchion (2).

22. A stanchion according to any one of Claims 15 to 18, **characterized in that** in the region of the lower end (61) thereof the protection element (35) is fixed with respect to the stanchion (2) by way of a pivotably movable plug-in connection (66).

23. A stanchion according to Claim 22, **characterized in that** the plug-in connection (66) comprises a plug-in element (67) provided on the protection element (35) and an opening (68) provided on the stanchion (2).

24. A stanchion according to Claim 23, **characterized in that** the plug-in element (67) is a one-piece curved portion of the protection element (35).

25. A stanchion according to any one of Claims 15 to 24, **characterized in that** the protection element (35) is a moulded sheet metal part, in particular a moulded part of aluminium.

## Revendications

1. Ridelle pour une ouverture de chargement d'une carrosserie de véhicule, munie dans sa partie inférieure d'un dispositif à levier (11, 12, 14) pour le verrouillage de la ridelle (2) sur un support de ridelle (10) solidaire avec le véhicule et d'un élément de protection (35), **caractérisée en ce que**, dans la position de verrouillage de la ridelle (2), l'élément de protection (35) recouvre, à l'extérieur, une partie longitudinale de la ridelle (2) disposée à l'arrière, la largeur de l'élément de protection (35) étant au moins égale à la largeur (BR) de la ridelle (2) dans la partie de la ridelle recouverte par l'élément de protection (35).

2. Ridelle selon la revendication 1, **caractérisée en ce que** l'élément de protection (35) s'appuie automatiquement contre la partie longitudinale de la ridelle (2) lors de la fermeture du dispositif à levier (11, 12, 14).

3. Ridelle selon la revendication 1 et/ou la revendication 2, **caractérisée en ce que** l'élément de protection comprend au moins une zone de déformation le long de son extension.

4. Ridelle selon l'une des revendications 1 à 3, **caractérisée en ce que** l'élément de protection (35) s'étend entre l'extrémité inférieure de la ridelle (2) et un levier (14) du dispositif à levier.

5. Ridelle selon la revendication 4, **caractérisée en ce qu'**un bord inférieur (38) de l'élément de protection (35) est fixé à la ridelle (2) et un bord supérieur (36) de l'élément de protection est fixé au levier (14) du dispositif à levier, qui est appuyé de manière pivotante contre le support de ridelle (10).

6. Ridelle selon la revendication 5, **caractérisée en ce que** le bord supérieur (36) est fixé du côté extérieur du levier (14), de préférence par rivetage.

7. Ridelle selon la revendication 5 ou la revendication 6, **caractérisée en ce que** l'élément de protection (35) est guidé, au niveau de son bord inférieur (38), autour de l'extrémité inférieure de la ridelle (2) et est fixé sur sa face frontale (39) orientée vers le bas, de préférence par rivetage.

8. Ridelle selon la revendication 7, **caractérisée en ce que** l'élément de protection (35) est recouvert, au niveau de son guidage autour de l'extrémité inférieure de la ridelle (2), par un élément angulaire ou un embout (45).

9. Ridelle selon la revendication 8, **caractérisée en ce que**, dans le cas d'un rivetage du bord inférieur (38), le rivet traverse l'élément angulaire ou l'embout (45).

10. Ridelle selon l'une des revendications précédentes, **caractérisée en ce que** l'élément de protection (35) est une couverture constituée d'un matériau plat et flexible.

11. Ridelle selon la revendication 10, **caractérisée en ce que** l'élément de protection (35) est constitué d'une bande de caoutchouc.

12. Ridelle selon l'une des revendications 10 ou 11, **caractérisée en ce que** la largeur (BS) de l'élément de protection est supérieure à la somme de la largeur (BR) de la partie de ridelle recouverte par l'élément de protection et des largeurs des interstices (40) laissés des deux côtés de la ridelle (2) par rapport aux parois latérales mobiles (5) adjacentes.

13. Ridelle selon la revendication 12, **caractérisée en ce que**, sur le bord supérieur (36) de l'élément de protection (35), une bordure (37) est posée de l'extérieur, celle-ci étant plus courte que la largeur (BS) de l'élément de protection (35) situé en dessous et pas plus longue que la largeur (BR) de la ridelle (2) dans sa partie recouverte.

14. Ridelle selon la revendication 1, **caractérisée en ce qu'**un bord inférieur (38) de l'élément de protection (35) est fixé à la ridelle (2) et un bord supérieur (36a) de l'élément de protection peut être accroché à la ridelle (2).

15. Ridelle selon la revendication 14, **caractérisée en ce que** l'élément de protection (35) est muni, au niveau de son bord supérieur (36a) d'un crochet (50) pouvant être accroché à un élément transversal (51) de la ridelle (2).

16. Ridelle selon la revendication 1 ou 2, **caractérisée en ce que** l'élément de protection (35) est rigide et est fixé, au niveau de son extrémité supérieure (60), à un levier (14) du dispositif à levier.

17. Ridelle selon la revendication 16, **caractérisée en ce que** l'extrémité supérieure (60) de l'élément de protection (35) est munie d'éléments de liaison (62, 63) en interaction avec des éléments de liaison (64) prévus sur le levier (14).

18. Ridelle selon la revendication 17, **caractérisée en ce que** les éléments de liaison (62, 63) de l'élément de protection (35) sont mobiles par rapport aux éléments de liaison (64) du levier (14) tout en conservant la liaison.

19. Ridelle selon l'une des revendications 17 et/ou 18, **caractérisée en ce que** les éléments de liaison du levier (14) sont des fentes (64) s'étendant dans sa direction longitudinale et **en ce que** les éléments de liaison de l'élément de protection (35) sont des pattes (62) s'emboîtant dans ces fentes et ils comprennent des tiges (63) reliant les pattes (62) entre elles.

20. Ridelle selon l'une des revendications 16 à 19, **caractérisée en ce que** l'élément de protection (35) peut, au niveau de son extrémité inférieure (61), être pivotant et maintenu fixe par rapport à la ridelle (2).

21. Ridelle selon la revendication 20, **caractérisée en ce que** l'élément de protection (35) est muni, sur le côté, d'au moins un élément d'entraînement (65) lui permettant d'être entraîné par une paroi latérale (5) pivotante par rapport à la ridelle (2).

22. Ridelle selon l'une des revendications 15 à 18, **caractérisée en ce que** l'élément de protection (35) est maintenue fixe par rapport à la ridelle (2) au niveau de son extrémité inférieure (61) par l'intermédiaire d'une liaison par emboîtement (66).

23. Ridelle selon la revendication 22, **caractérisée en ce que** la liaison par emboîtement (66) est constituée d'un élément d'emboîtement (67) prévu sur l'élément de protection (35) et d'une ouverture (68) prévue sur la ridelle (2).

24. Ridelle selon la revendication 23, **caractérisée en ce que** l'élément d'emboîtement (67) est une pliure d'une seule pièce de l'élément de protection (35).

25. Ridelle selon l'une des revendications 15 à 24, **caractérisée en ce que** l'élément de protection (35) est une pièce moulée en tôle, plus particulièrement une pièce moulée en aluminium.
